(19)

Europäisches
Patentamt
European
Patent Office
Office européen
des brevets

(11) **EP 4 488 402 A1**

(12) **EUROPEAN PATENT APPLICATION**
published in accordance with Art. 153(4) EPC

(43) Date of publication:
**08.01.2025 Bulletin 2025/02**

(21) Application number: **23763015.7**

(22) Date of filing: **03.03.2023**

(51) International Patent Classification (IPC):
**C22C 38/02** (2006.01)    **C21D 6/00** (2006.01)

(52) Cooperative Patent Classification (CPC):
**Y02P 10/20**

(86) International application number:
**PCT/CN2023/079646**

(87) International publication number:
**WO 2023/165617 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.03.2022 CN 202210209998**

(71) Applicant: **Maanshan Iron & Steel Co., Ltd.**
**Ma'anshan, Anhui 243041 (CN)**

(72) Inventors:
• **WANG, Kaizhong**
  **Maanshan, Anhui 243041 (CN)**
• **YANG, Zhiqiang**
  **Maanshan, Anhui 243041 (CN)**

• **HU, Fangzhong**
  **Maanshan, Anhui 243041 (CN)**
• **WU, Lin**
  **Maanshan, Anhui 243041 (CN)**
• **CHEN, Shijie**
  **Maanshan, Anhui 243041 (CN)**
• **WANG, Zimin**
  **Maanshan, Anhui 243041 (CN)**
• **YANG, Shaopeng**
  **Maanshan, Anhui 243041 (CN)**
• **JIN, Guozhong**
  **Maanshan, Anhui 243041 (CN)**

(74) Representative: **De Clercq & Partners**
**Edgard Gevaertdreef 10a**
**9830 Sint-Martens-Latem (BE)**

(54) **HIGH-STRENGTH AND HIGH-TOUGHNESS STEEL WITH LONG SERVICE LIFE AND WALL THICKNESS OF >= 600 MM FOR VALVE BODY OF SUBSEA CHRISTMAS TREE, AND HEAT TREATMENT METHOD AND PRODUCTION METHOD THEREFOR**

(57)    High-strength and high-toughness steel with a long service life and a wall thickness of $\geq$ 600 mm for a valve body of a subsea Christmas tree, and a heat treatment method and production method therefor. The steel for a valve body of a subsea Christmas tree mainly comprises the following components: C, Si, Mn, Cr, Mo, Ni, Cu, Al, Nb, Ti, B and N, wherein $\{2.5+30\times[\text{B}-1.27\times(\text{N}-0.002-0.29\times\text{Ti}-0.15\times\text{N}-\text{b})]\}\times(1+4\times\text{Mn})\times(1+2\times\text{Cr})\times(1+3.5\times\text{Mo})\geq 90$; and $30\times\text{Ni}+20\times\text{Mo}+16\times\text{Cu}+22\times\text{Mn}-12\times\text{Si}\times\text{Mn}+28\times\text{C}-10\times\text{C}\times\text{Mn}\geq 74.5$. By controlling the composition and amounts of the chemical components of the steel, the performance of the steel can meet the requirements of a subsea Christmas tree in a harsh environment, and the fatigue strength of the steel is $\geq$ 320 MPa after the steel is corroded for $2\times10^7$ cycles in a seawater environment.

FIG. I

**Description**

**FIELD**

The present application relates to the technical field of alloy steel, and in particular to a high-strength, high-toughness, and long-life steel for a subsea Christmas tree valve body with a wall thickness of $\geq$ 600mm, and a heat treatment method and a production method thereof, and specifically relates to a steel with a wall thickness of $\geq$ 600mm, a yield strength of $\geq$ 680MPa, and a -46°C $KV_2 >\_$ 200J; and a steel with a fatigue strength of $\geq$ 320MPa after corrosion for $2\times10^7$ cycles in a seawater environment, and a heat treatment method and a production method thereof, which can meet use requirements of Christmas tree in more stringent seawater environments.

**BACKGROUND**

China has vigorously developed domestic oil and gas drilling and production, particularly increased the development of deep-sea oil and gas resources. It is reported that the current depth of land oil and gas drilling and production in China has exceeded 7,300 meters, and the depth of offshore oil and gas drilling and production has approached 3,000 meters. The Christmas tree is an essential device for oil and gas production. The Christmas trees used in China are all imported, which seriously affects China's oil and gas security. The Christmas tree is composed of multiple modules (valve bodies), and has high requirements for the strength and toughness of the material. Especially, subsea Christmas trees have higher requirements for low-temperature toughness and corrosion resistance.

At present, the Christmas tree valve body for land use generally has a thickness within 300mm, and is made of 4130 steel. However, with the deterioration of the oil and gas production environment, especially in deep-water environment, the thickness requirements for the Christmas tree valve block increases, and the thickness is generally required to be $\geq$ 400mm. The performance of 4130 steel at 1/4 thickness cannot meet the requirements. Therefore, it is necessary to develop new materials to meet the steel needs of the super-thick Christmas tree valve block, so as to improve the strategic security of China's oil and gas equipment.

Patent CN 102839331 A discloses a high-toughness corrosion-resistant steel and its manufacturing method for manufacturing the Christmas tree body. The Cr content in the patent is as high as 12-14%, the yield strength of the material is $\geq$ 517MPa, and the impact energy at -46°C is $\geq$ 27J. The Cr content of the patent is high, the cost is high, and the yield strength is still low although it is increased to 517MPa, and the low-temperature toughness is poor. In a more stringent low-temperature environment, the toughness will be insufficient.

Patent CN 112281069 A discloses a production method for 8630 ultra-long forgings for deep-sea Christmas tree equipment. Using the forging process of the patent, the yield strength of the obtained material is $\geq$ 580MPa, the impact energy at -29°C is $\geq$ 30J, and the low-temperature toughness of the material is low.

The performance of the Christmas tree steel disclosed in the above patents cannot meet the requirements for use at low temperatures, and the service life is not examined.

**SUMMARY**

A high-strength, high-toughness, and long-life steel for a subsea Christmas tree valve body with a wall thickness of $\geq$ 600mm, and a heat treatment method and a production method thereof are provided according to embodiments of the present application. The steel has excellent toughness, corrosion resistance and fatigue performance, can meet the use requirements of Christmas trees in more stringent underwater environments, and the method is suitable for manufacturing a subsea Christmas tree valve body.

To achieve the above purpose, the technical solution adopted by the present application is as follows:

A high-strength, high-toughness, and long-life steel for a subsea Christmas tree valve body with a wall thickness of $\geq$ 600mm, comprising the following chemical components in weight percentage: C 0.22% to 0.28%, Si 0.15% to 0.35%, Mn 1.7% to 2.0%, Cr 0.5% to 0.7%, Mo 0.3% to 0.5%, Ni 0.80% to 1.00%, Cu 0.30% to 0.50%, Al 0.015% to 0.035%, Nb 0.025% to 0.045%, Ti 0.0035% to 0.0055%, B 0.0005% to 0.0030%, P $\leq$ 0.015%, S $\leq$ 0.015%, N 0.0070% to 0.0120%, O $\leq$ 0.004%, with the balance being Fe and other inevitable impurities; wherein,

$$\text{wherein,} \qquad A=\{2.5+30\times[B-1.27\times(N-0.002-0.29\times Ti-0.15\times Nb)]\}\times(1+4\times Mn)\times(1+2\times Cr)\times(1+3.5\times Mo), A \geq 90;$$

$$D=30\times Ni+20\times Mo+16\times Cu+22\times Mn-12\times Si\times Mn+28\times C-10\times C\times Mn, D \geq 74.5;$$

In the calculation formula of A and D values, the value indicated by each element = the content of the element in steel × 100.

In order to produce a high-strength, high-toughness, and long-life steel for the subsea Christmas tree valve body with a wall thickness of ≥ 600mm that can meet requirements of more stringent underwater environment, the following controls are carried out in the present application:

C: C is the cheapest strengthening element in steel. For every 0.1% increase in solid solution C, the strength can be increased by about 450MPa. C together with the alloy elements in the steel forms a precipitated phase, which plays a precipitation strengthening role. C can significantly improve the hardenability, so that the core of the large-sized Christmas tree valve body can obtain a martensitic structure. However, as the content of the martensitic structure increases, the plasticity and toughness decrease, and the high C content is harmful to the corrosion performance, so the C content is controlled at 0.22% to 0.28%.

Si: Si is an effective solid solution strengthening element in steel, which improves the strength and hardness of steel. Si can play a deoxidizing role during steelmaking and is a commonly used deoxidizer. However, Si is easy to segregate at austenite grain boundaries, which can reduce the grain boundary bonding force, and cause brittleness. In addition, Si is easy to cause element segregation in steel. Therefore, the Si content is controlled at 0.15% to 0.35%.

Mn: Mn can play a role in solid solution strengthening, and its solid solution strengthening ability is weaker than Si. Mn is an austenite stabilizing element that can significantly improve the hardenability of steel and reduce the decarburization of steel. The combination of Mn and S can prevent hot brittleness caused by S. However, excessive Mn will reduce the plasticity of steel. Therefore, the Mn content is controlled at 1.7% to 2.0%.

Cr: Cr is a carbide-forming element. Cr can improve the hardenability and strength of steel, but it is easy to cause temper brittleness. Cr can improve the oxidation resistance and corrosion resistance of steel, but when the Cr content is too high, it will increase the crack sensitivity. The Cr content should be controlled at 0.50% to 0.70%.

Mo: Mo mainly improves the hardenability and heat resistance of steel. Mo dissolved in the matrix can keep the structure of steel at a high stability during tempering, and can effectively reduce the segregation of impurity elements such as P, S and As at the grain boundaries, so as to improve the toughness of steel and reduce temper brittleness. Mo reduces the stability of $M_7C_3$. When the Mo content is high, needle-shaped $Mo_2C$ will be formed, which will lead to a decrease in the Mo content of the matrix. Mo can improve the strength of steel through the combined effects of solid solution strengthening and precipitation strengthening, and can also change the toughness of steel by changing the precipitation of carbides. Therefore, the Mo content is controlled at 0.30% to 0.50%.

Ni: Ni together with Fe can form an infinitely miscible solid solution, and Ni is an austenite stabilizing element, and has a function of expanding the phase region, which increases the stability of supercooled austenite, shifts the C curve to the right, and improves the hardenability of steel. Ni can refine the width of martensite laths and improve strength. Ni significantly reduces the toughness-brittle transition temperature of steel and improves low-temperature toughness. The Ni content is controlled at 0.80% to 1.00%.

Cu: Cu can expand the austenite phase region. Cu elemental substance can be used as the second phase to significantly improve the strength, and can improve the tempering stability and strength of the structure. However, excessive Cu will cause Cu brittleness. Therefore, the Cu content is controlled at 0.30% to 0.50%.

Al: Al is the main deoxidizer for steelmaking. The combination of Al and N to form fine and dispersed AlN, and maintains a coherent relationship with the matrix, which can play a role in strengthening and refining the structure, and can increase the resistance to fatigue crack initiation and expansion, so as to improve the endurance strength of steel. The Al content is controlled at 0.015% to 0.035%.

Nb: Nb is a strong element forming the C and N compound. Nb (C, N) is finely dispersed and maintains a coherent relationship with the matrix, which can play a role in strengthening and refining the structure. The strengthening of the matrix can increase the fatigue crack initiation and expansion resistance, thereby improving fatigue strength. The Nb content is controlled at 0.025% to 0.045%.

Ti: Ti plays a wide range of roles in steel. Ti can be configured as a deoxidizer for deoxidation. Ti, C and N can form carbonitrides, which precipitate in steel and play a role in precipitation strengthening. It can also pin grain boundaries to hinder grain growth. The Ti content is controlled at 0.0035% to 0.0055%.

B: B is generally considered to be a trace element in steel and has a strong hardening effect. It can improve the toughness of steel while improving hardenability. However, due to the strong hardenability of B, the B content in steel is not easy to be too high, so it is controlled at 0.0005 to 0.0030%.

O and N: T.O forms oxide inclusions in steel, and T.O is controlled to be $\leq$ 0.0040%; N together with nitride-forming elements can form fine precipitated phases in steel to refine the structure, so the N content is controlled at 0.0070% to 0.0120%.

The present application makes full use of the beneficial effects of Mn, Cr, Mo and B elements on hardenability to ensure the hardenability of thick-walled valve bodies. Nb and Ti form nitrides with N to consume nitrogen, ensuring that the B element exists in the steel in a solid solution state and fully exerts the hardenability effect, so as to work together to ensure that the 1/4 part of the valve body still has fine tempered sorbite when the wall thickness is $\geq$ 600mm. Therefore, the above 7 elements should meet the following requirements: $A = \{2.5 + 30 \times [B - 1.27 \times (N - 0.002 - 0.29 \times Ti - 0.15 \times Nb)]\} \times (1 + 4 \times Mn) \times (1 + 2 \times Cr) \times (1 + 3.5 \times Mo)$, $A \geq 90$, where the value indicated by each element = the content of the element in the steel $\times$ 100.

To ensure the low-temperature toughness of steel, the toughening elements need to be limited. Ni is the element that can improve the toughness, and Mo is conducive to improving the tempering stability, so as to improve the toughness of steel. Cu can precipitate fine nano-copper precipitates in steel, so as to improve the toughness of steel. Therefore, the contribution coefficients of the above three elements to toughness are 30, 20, and 16 respectively. Mn can promote the selection of variants in steel during phase transformation, so as to make the microstructure fine and improve toughness, but the segregation of Si and Mn leads to a decrease in toughness. Therefore, Mn has an independent contribution to toughness and interacts with Si and Mn, so the coefficients are 22 and -12 respectively. The influence of C content on toughness also has two aspects. On the one hand, it promotes phase transformation refinement and improves toughness. On the other hand, it interacts with Mn to promote the hardening of steel, resulting in lower toughness. Therefore, C has an independent contribution to toughness and interacts with C and Mn, so the coefficients are 28 and -10 respectively. Since P and S in steel are also harmful to the toughness of steel, but the present application has set a maximum content limit for P and S content, the harm of P and S to toughness is not considered. Therefore, the toughness determination factor D of steel meets that $D = 30 \times Ni + 20 \times Mo + 16 \times Cu + 22 \times Mn - 12 \times Si \times Mn + 28 \times C - 10 \times C \times Mn \geq 74.5$, where the value indicated by each element = the content of the element in the steel $\times$ 100.

The metallographic structure of the high-strength, high-toughness, and long-life steel for the subsea Christmas tree valve body with a wall thickness of $\geq$ 600mm is tempered sorbite, and the grain size is 18 to 25$\mu$m.

The high-strength, high-toughness, and long-life steel for the subsea Christmas tree valve body with a wall thickness of $\geq$ 600mm, has a tensile strength of $\geq$ 850MPa, yield strength $\geq$ 680MPa, -46°C KV$_2$ $\geq$ 200J, A $\geq$ 20%, Z $\geq$ 70% at 1/4 thickness; and a fatigue strength after $2 \times 10^7$ cycles of corrosion in seawater environment of $\geq$ 320MPa. Specifically, the high-strength, high-toughness, and long-life steel for the subsea Christmas tree valve body with a wall thickness of $\geq$ 600mm, has a tensile strength of 850 to 920MPa, yield strength of 680 to 750MPa, -46°C KV$_2$ of 210 to 230J, A of 20 to 25%, and Z of 70 to 75% at 1/4 thickness, and a fatigue strength after $2 \times 10^7$ cycles of corrosion in seawater environment of 320 to 350MPa.

According to an embodiment of the present application, a heat treatment method for the high-strength, high-toughness, and long-life steel for the subsea Christmas tree valve body with a wall thickness of $\geq$ 600mm is provided. The method comprises the following steps:

(1) Step quenching: heating the Christmas tree valve body to 920 to 970°C, keeping warm, and then water cooling; then heating to 860 to 900°C, keeping warm, and then water cooling. In the present application, the wall thickness of the subsea Christmas tree valve body reaches more than 600mm, and step quenching can ensure that the material has a fine martensitic structure, which is conducive to strength and toughness. After the first quenching, the grain size and martensite of the steel are refined. During the second quenching, the structure is refined before heating, which is conducive to grain nucleation and grain refinement. The temperature of the second quenching is lower than the temperature of the first quenching, which can ensure that the austenite grains do not coarsen. After quenching, the grains and martensite variants increase, the microstructure is refined, which is conducive to improving strength, toughness and corrosion fatigue life.

(2) Step tempering: heating the Christmas tree valve body to T1=450 to 550°C, keeping warm, then heating to T2=650 to 700°C, keeping warm, and then water cooling. Step tempering is configured to control the type and proportion of carbide precipitation to improve toughness and corrosion fatigue life. In the first stage of step tempering, on the one hand, the temperature inside and outside the forging is kept consistent. On the other hand, the precipitated phase of the steel is mainly fine M$_2$C carbides, which improves the precipitation strength and offsets a part of the reduced strength caused by tempering. The fine M$_2$C carbides also help reduce the internal stress of the structure and improve the corrosion fatigue life. The temperature in the second stage of step tempering is higher than the temperature in the first stage, which is conducive to the precipitation of precipitated phases such as $M_{23}C_6$ and $M_6C$, and improves toughness. In a case that step tempering is not adopted, the types of precipitated phases of steel will be reduced. Water cooling after tempering can improve work efficiency on the one hand and is conductive to the surface quality of forgings on the other hand.

In the step (1), the heating rate of each heating is 50 to 110°C/h, and each heat holding time is t=0.8 to 1.2×S, S is the wall thickness of the steel pipe in mm, and t is in min.

In the step (2), the heating rate of the first heating is 50 to 110°C/h, and the heat holding time of the first heating is t1=0.8 to 1.2×S, where S is the wall thickness of the steel pipe in mm, and t1 is in min.

The above heating rate can ensure that the temperatures at different positions of the valve body are close. In a case that the heating rate is too fast, the temperature gradient at different positions of the valve body will be large, which will increase the internal stress and increase the risk of cracks. In a case that the heating rate is too slow, there is a risk of tempering reaction during the heating stage, resulting in uncontrolled types and contents of precipitated phases. The heat holding time is the key to controlling the content and size of precipitated phases. In a case that the heat holding time is too short, there will be less precipitated phases and the beneficial effects will be reduced. In a case that the heat holding time is too long, although the precipitated phases will increase, the size of the precipitated phases will increase, which will reduce the dispersion distribution effect of the precipitated phases. In a case that the precipitated phases are too large, the risk of internal microcracks will increase.

In the step (2), the heating rate of the second heating is 80 to 120°C/h, and the heat holding time is t2=0.5 to 1.2×S, where S is the wall thickness of the steel pipe in mm and t2 is in min. The heating rate of the second stage of step tempering is higher than that of the first stage, because after the first stage of tempering, the temperature gradient of different positions of the valve body has been reduced. In this way, the time cost can be reduced by increasing the heating rate in the second stage, and the increase in the heating rate is also helpful in controlling the size of the precipitated phase.

In the steps (1) and (2), the water cooling is performed to below 100°C.

The parameters of the tempering process should meet X=T2×(S/10+lgt2)/1000, 42≤X≤48. The tempering parameters directly determine the mechanical properties and corrosion fatigue properties of the final product. In a case that the tempering parameters are too large, the softening effect of the material is large, resulting in a large decrease in the strength of the material and the inability to ensure strength. It will also cause the size of the precipitated phase to be too large, weakening the precipitation strengthening effect, and increasing the risk of microcracks in the steel and reducing toughness. In a case that the tempering parameters are small, the strength of the material will not be softened enough, the structural stress and internal stress will be large, and the toughness and corrosion fatigue performance will be reduced.

According to an embodiment of the present application, a production method of the high-strength, high-toughness, and long-life steel for the subsea Christmas tree valve body with a wall thickness of ≥ 600mm is provided. The production method comprises the following steps: arc furnace or converter smelting → LF furnace refining → RH or VD vacuum degassing → casting to obtain a continuous casting billet → heating the continuous casting billet→ forging into a valve body → heat treatment → machining → flaw detection → packaging and storage, where the heat treatment is carried out using the above-mentioned heat treatment method.

The continuous casting billet has a weight of ≥10 tons and a diameter of ≥1.2 meters.

Compared with the conventional technology, the present application has following beneficial effects:

1. The high-strength, high-toughness, and long-life steel for the subsea Christmas tree valve body with a wall thickness of ≥ 600mm according to embodiments of the present application controls the composition and dosage of the chemical components in the steel, so that its performance meets the requirements of the subsea Christmas tree in harsh environments.

2. The relationship between B, N, Ti, Nb, Mn, Cr and Mo in the high-strength, high-toughness, and long-life steel for the subsea Christmas tree valve body with a wall thickness of ≥ 600mm according to embodiments of the present application satisfies {2.5+30×[B-1.27×(N-0.002-0.29×Ti-0.15×Nb)]}×(1+4×Mn)×(1+2×Cr)×(1+3.5×Mo) ≥ 90, so as to ensure the hardenability of the thick-walled subsea Christmas tree valve body.

3. The relationship between Ni, Mo, Cu, Mn, Si and C in the high-strength, high-toughness, and long-life steel for the subsea Christmas tree valve body with a wall thickness of ≥ 600mm according to embodiments of the present application satisfies 30×Ni+20×Mo+16×Cu+22×Mn-12×Si×Mn+28×C-10×C×Mn≥74.5, so as to ensure the low temperature toughness of the thick-walled subsea Christmas tree valve body;

4. The heat treatment of the high-strength, high-toughness, and long-life steel for the subsea Christmas tree valve body with a wall thickness of ≥ 600mm provided by the present application adopts a step quenching + step tempering process for heat treatment, and the heating temperature T2 and the heat holding time t2 during the tempering treatment are controlled to ensure that the overall performance of the steel for the subsea Christmas tree valve body can meet the requirements of the subsea Christmas tree in harsh environments.

**BRIEF DESCRIPTION OF THE DRAWINGS**

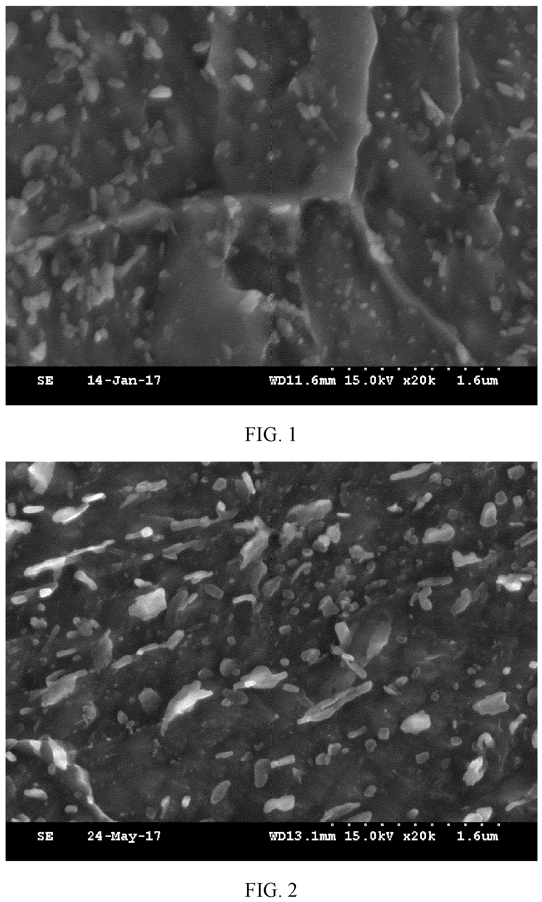

FIG. 1 is a microscopic morphology of the steel for the subsea Christmas tree valve body in Example 2, and it is shown that the carbides in the structure are fine.

FIG. 2 is a microscopic morphology of the steel for the subsea Christmas tree valve body in Comparative Example 3, and it is shown that the carbides in the structure are coarse.

**DETAILED DESCRIPTION OF EMBODIMENTS**

According to an embodiment of the present application, a high-strength, high-toughness, and long-life steel for the subsea Christmas tree valve body with a wall thickness of $\geq 600$mm is provided, comprising the following chemical components in weight percentage: C 0.22% to 0.28%, Si 0.15% to 0.35%, Mn 1.7% to 2.0%, Cr 0.5% to 0.7%, Mo 0.3% to 0.5%, Ni 0.80% to 1.00%, Cu 0.30% to 0.50%, Al 0.015% to 0.035%, Nb 0.025% to 0.045%, Ti 0.0035% to 0.0055%, B 0.0005% to 0.0030%, P $\leq$ 0.015%, S $\leq$ 0.015%, N 0.0070 to 0.0120%, O $\leq$ 0.004%, with the balance being Fe and other inevitable impurities;

wherein, A={2.5+30$\times$[B-1.27$\times$(N-0.002-0.29$\times$Ti-0.15$\times$Nb)]}$\times$(1+4$\times$Mn)$\times$(1+2$\times$Cr)$\times$(1+3.5$\times$Mo), A$\geq$90, preferably Ais 90 to 130;

D=30$\times$Ni+20$\times$Mo+16$\times$Cu+22$\times$Mn-12$\times$Si$\times$Mn+28$\times$C-10$\times$C$\times$Mn, D $\geq$ 74.5, preferably D is 74.5 to 80;

In the calculation formula of A and D values, the value indicated by each element = the content of the element in the steel $\times$ 100.

A production method of the high-strength, high-toughness, and long-life steel for the subsea Christmas tree valve body with a wall thickness of $\geq$ 600mm is provided, comprising the following steps: arc furnace or converter smelting $\rightarrow$ LF furnace refining $\rightarrow$ RH or VD vacuum degassing $\rightarrow$ casting to obtain a continuous casting billet with a weight of $\geq$ 10 tons and a diameter of $\geq$ 1.2 meters $\rightarrow$ heating the continuous casting billet $\rightarrow$ forging into a valve body $\rightarrow$ heat treatment $\rightarrow$ machining $\rightarrow$ flaw detection $\rightarrow$ packaging and storage.

In the production method, in the RH or VD vacuum degassing step, the pure degassing time is $\geq$ 15 minutes to ensure that the [H] content is $\leq$1.5ppm after vacuum treatment, avoiding the appearance of white spots in the steel and causing hydrogen embrittlement;

In the casting step, the target temperature of the molten steel is controlled at 10 to 40°C above the liquidus temperature;

The heat treatment is carried out according to following steps:

(1) Step quenching: heating the Christmas tree valve body to 920 to 970°C, keeping warm, and then water cooling to below 100°C; then heating to 860 to 900°C, keeping warm, and then water cooling to below 100°C. The heating rate of each heating is 50 to 110°C/h, and each heat holding time t meets that t=0.8 to 1.2$\times$S, S is the wall thickness of the steel pipe in mm, and t is in min;

(2) Step tempering: heating the Christmas tree valve body to T1=450 to 550°C, keeping warm, and then heating to T2=650 to 700°C and keeping warm, and then water cooling to below 100°C. The heating rate of the first heating is 50 to 110°C/h, and the heat holding time of the first heating t1 meets that t1=0.8 to 1.2$\times$S; the heating rate of the second heating is 80 to 120°C/h, and the heat holding time of the second heating t2 meets that t2=0.5 to 1.2$\times$S, S is the wall thickness of the steel pipe in mm, and t2 is in min; the parameters of the tempering process should meet that X=T2$\times$(S/10+1gt2)/1000, 42$\leq$X$\leq$48.

The performance test method of the high-strength, high-toughness, and long-life steel for the subsea Christmas tree valve body with a wall thickness of $\geq$ 600mm prepared by the above process is as follows:
Structure: taking samples on the valve body extension, and taking samples within the 1/4 thickness of the extension (the thickness of 600mm and 700mm) for metallographic and grain size analysis.

Performance: taking samples on the valve body extension, and taking samples subjected to streching, impact, fatigue within the 1/4 thickness of the extansion (the thickness of 600mm an 700mm), and mechanical performance tests were performed with reference to GB/T228, GB/T229 and GB/T 7733.

The present application is described in detail below in conjunction with the embodiment.

The chemical composition and weight percentage of the high-strength, high-toughness, and long-life steel for the subsea Christmas tree valve body with a wall thickness of ≥ 600mm in each Example and Comparative Example are shown in Table 1, with the balance being iron and inevitable impurities.

Table 1

| D | A | O | N | S | P |
|---|---|---|---|---|---|
| 74.5 | 91.1 | 0.0035 | 0.008 | 0.009 | 0.00 |
| 79.2 | 126.9 | 0.0032 | 0.009 | 0.008 | 0.011 |
| 78.4 | 109.8 | 0.0028 | 0.011 | 0.009 | 0.01 |
| 74.4 | 86.8 | 0.0031 | 0.009 | 0.003 | 0.01 |
| 83.9 | 106.7 | 0.0024 | 0.01 | 0.004 | 0.00 |
| 73.4 | 114.6 | 0.0033 | 0.012 | 0.005 | 0.00 |

| Steel type | C | Si | Mn | Cr | Ni | Mo | Cu | Al | Nb | Ti | B |
|---|---|---|---|---|---|---|---|---|---|---|---|
| Example 1 | 0.22 | 0.28 | 1.78 | 0.53 | 0.88 | 0.33 | 0.38 | 0.018 | 0.028 | 0.0039 | 0.0018 |
| Example 2 | 0.25 | 0.22 | 1.82 | 0.63 | 0.82 | 0.48 | 0.46 | 0.034 | 0.032 | 0.0042 | 0.0023 |
| Example 3 | 0.28 | 0.34 | 1.93 | 0.58 | 0.93 | 0.36 | 0.39 | 0.021 | 0.044 | 0.0051 | 0.0038 |
| Comparative Example 1 | 0.22 | 0.18 | 1.76 | 0.52 | 0.84 | 0.32 | 0.35 | 0.025 | 0.028 | 0.0043 | 0.0018 |
| Comparative Example 2 | 0.27 | 0.17 | 1.96 | 0.64 | 0.95 | 0.31 | 0.49 | 0.028 | 0.036 | 0.0052 | 0.0027 |
| Comparative Example 3 | 0.30 | 0.32 | 1.87 | 0.67 | 0.81 | 0.37 | 0.31 | 0.031 | 0.042 | 0.0037 | 0.0039 |

The parameters of the heat treatment process of the high-strength, high-toughness, and long-life steel for the subsea Christmas tree valve body a wall thickness of ≥ 600mm in each Example and Comparative Example are shown in Table 2.
Table 2

| Steel type | Thickness | Heat treatment process | | Parameter X |
| --- | --- | --- | --- | --- |
| | | Quenching | Tempering | |
| Example 1 | 600mm | Heating to 940°C at a rate of 60°C/h, keeping warm for 500 minutes, and water cooling; then heating to 860°C at a rate of 80°C/h, keeping warm for 520 minutes, and then water cooling | Heating to 460°C at a rate of 70°C/h, then keeping warm for 600 minutes, then heating to 670°C at a rate of 90°C/h, keeping warm for 660 minutes, and water cooling | 42.09 |
| Example 2 | 600mm | Heating to 900°C at a rate of 75°C/h, keeping warm for 600 minutes, and water cooling; then heating to 880°C at a rate of 95°C/h, keeping warm for 540 minutes, and then water cooling | Heating to 480°C at a rate of 90°C/h, then keeping warm for 600 minutes, then heating to 660°C at a rate of 100°C/h, keeping warm for 660 minutes, and water cooling | 41.46 |
| Example 3 | 700mm | Heating to 970°C at a rate of 100°C/h, keeping warm for 590 minutes, and water cooling; then heating to 860°C at a rate of 95°C/h, keeping warm for 580 minutes, and then water cooling | Heating to 520°C at a rate of 80°C/h, then keeping warm for 600 minutes, then heating to 650°C at a rate of 80°C/h, keeping warm for 630 minutes, and water cooling | 47.32 |
| Comparative Example 1 | 600mm | Heating to 920°C at a rate of 60°C/h, keeping warm for 550 minutes, and water cooling; then heating to 900°C at a rate of 90°C/h, keeping warm for 700 minutes, and then water cooling | Heating to 460°C at a rate of 90°C/h, then keeping warm for 600 minutes, then heating to 670°C at a rate of 90°C/h, keeping warm for 600 minutes, and water cooling | 42.06 |
| Comparative Example 2 | 600mm | Heating to 860°C at a rate of 95°C/h, keeping warm for 480 minutes, and water cooling; then heating to 980°C at a rate of 90°C/h, keeping warm for 800 minutes, and water cooling | Heating to 480°C at a rate of 100°C/h, then keeping warm for 600 minutes, then heating to 620°C at a rate of 70°C/h, keeping warm for 240 minutes, and water cooling | 38.67 |
| Comparative Example 3 | 700mm | Heating to 950°C at a rate of 60°C/h, keeping warm for 560 minutes, and water cooling; then heating to 880°C at a rate of 80°C/h, keeping warm for 720 minutes, and then water cooling | Heating to 520°C at a rate of 80°C/h, then keeping warm for 600 minutes, then heating to 660°C at a rate of 90°C/h, keeping warm for 1120 minutes, and water cooling | 48.21 |

The mechanical property test results of the high-strength, high-toughness, and long-life steel for the subsea Christmas tree valve body with a wall thickness of ≥ 600mm in each Example and Comparative Example are shown in Table 3.

Table 3 List of mechanical properties test results in each Example and Comparative Example

| Steel type | Thickness | Metallographic structure | Grain size /μm | Properties after heat treatment | | | | | Corrosion fatigue strength in seawater environment ($2\times10^7$cycles) (MPa) |
| --- | --- | --- | --- | --- | --- | --- | --- | --- | --- |
| | | | | $R_m$/ MPa | $R_{p0.2}$/ MPa | A/% | Z/% | -46°C $KV_2$/J | |
| Example 1 | 600mm | Tempered sorbite | 24.8 | 897 | 688 | 22.5 | 73.5 | 213 | 323 |

(continued)

| Steel type | Thickness | Metallographic structure | Grain size /μm | Properties after heat treatment | | | | | Corrosion fatigue strength in seawater environment (2×10⁷cycles) (MPa) |
|---|---|---|---|---|---|---|---|---|---|
| | | | | $R_m$/ MPa | $R_{p0.2}$/ MPa | A/% | Z/% | -46°C $KV_2$/J | |
| Example 2 | 600mm | Tempered sorbite | 22.9 | 919 | 736 | 22.0 | 72.5 | 226 | 347 |
| Example 3 | 700mm | Tempered sorbite | 18.9 | 858 | 713 | 21.5 | 70.5 | 221 | 331 |
| Comparative Example 1 | 600mm | Tempered sorbite | 29.6 | 832 | 641 | 18.5 | 70.5 | 188 | 311 |
| Comparative Example 2 | 600mm | Tempered sorbite | 28.7 | 773 | 625 | 16.5 | 58.5 | 143 | 292 |
| Comparative Example 3 | 700mm | Tempered sorbite | 21.6 | 823 | 689 | 17.5 | 54.5 | 164 | 308 |

From the above data, it can be seen that the strength, plasticity, toughness and fatigue performance of the steel in Examples 1-3 controlled according to the present application are all better. In Comparative Example 1, although the content of each chemical component and the heat treatment process are controlled according to the scope of the present application, the improper control of the A value and the D value leads to too low material strength, insufficient plasticity, toughness and fatigue performance. In Comparative Example 2, although the component design is reasonable, the heat treatment process is improper, resulting in coarse grains of the material, insufficient strength and toughness and insufficient fatigue performance. In Comparative Example 3, although the A value, the D value and the heat treatment parameters are controlled according to the scope of the present application, the improper control of the content of some chemical components and the improper control of the relationship between the tempering parameters T2 and t2 lead to too low material strength, insufficient plasticity and toughness and fatigue performance.

The detailed description of the high-strength, high-toughness, and long-life steel for the subsea Christmas tree valve body with a wall thickness of ≥ 600mm and its heat treatment and production method as described above with reference to the examples is illustrative rather than restrictive. Several examples can be listed according to the limited range. Therefore, changes and modifications without departing from the overall concept of the present application should be within the protection scope of the present application.

## Claims

1. A high-strength, high-toughness, and long-life steel for a subsea Christmas tree valve body with a wall thickness of ≥ 600mm, comprising the following chemical components in weight percentage: C 0.22% to 0.28%, Si 0.15% to 0.35%, Mn 1.7% to 2.0%, Cr 0.5% to 0.7%, Mo 0.3% to 0.5%, Ni 0.80% to 1.00%, Cu 0.30% to 0.50%, Al 0.015% to 0.035%, Nb 0.025% to 0.045%, Ti 0.0035% to 0.0055%, B 0.0005% to 0.0030%, P ≤ 0.015%, S ≤ 0.015%, N 0.0070 to 0.0120%, O ≤ 0.004%, with the balance being Fe and other inevitable impurities;

   wherein, A={2.5+30×[B-1.27×(N-0.002-0.29×Ti-0.15×Nb)]}×(1+4×Mn)×(1+2×Cr)×(1+3.5×Mo), A≥90;

$$D=30×Ni+20×Mo+16×Cu+22×Mn-12×Si×Mn+28×C-10×C×Mn, \ D ≥74.5;$$

   in the calculation formula of A and D values, an value indicated by each element = a content of the element in steel × 100,
   wherein a metallographic structure of the high-strength, high-toughness, and long-life steel for a subsea Christmas tree valve body with a wall thickness of ≥ 600mm is tempered sorbite, and a grain size is 18 to 25 μm.

2. The high-strength, high-toughness, and long-life steel for a subsea Christmas tree valve body with a wall thickness of ≥ 600mm according to claim 1, wherein the high-strength, high-toughness, and long-life steel for a subsea Christmas tree valve body with a wall thickness of $\geq$ 600mm has a tensile strength of $\geq$850MPa, a yield strength of $\geq$680MPa, -46°C $KV_2$ $\geq$200J, A $\geq$20%, and Z $\geq$70% at 1/4 thickness; and a fatigue strength after $2\times10^7$ cycles of corrosion in seawater environment of $\geq$320Mpa.

3. A heat treatment method for the high-strength, high-toughness, and long-life steel for a subsea Christmas tree valve body with a wall thickness of $\geq$ 600mm according to claim 1 or 2, wherein the heat treatment method comprises the following steps:

   (1) step quenching: heating the Christmas tree valve body to 920 to 970°C, keeping warm, and then water cooling; then heating to 860 to 900°C, keeping warm, and then water cooling; and
   (2) step tempering: heating the Christmas tree valve body to T1=450 to 550°C, keeping warm, then heating to T2=650 to 700°C, keeping warm, and then water cooling.

4. The heat treatment method according to claim 3, wherein in the step (1), heating rate of each heating is 50 to 110°C/h, and each heat holding time is $t=0.8$ to $1.2\times S$, where S is a wall thickness of a steel pipe in mm, and t is in min.

5. The heat treatment method according to claim 3, wherein in the step (2), heating rate of the first heating is 50 to 110°C/h, and heat holding time of the first heating is $11=0.8$ to $1.2\times S$, where S is a wall thickness of a steel pipe in mm, and t1 is in min.

6. The heat treatment method according to claim 3, wherein in the step (2), heating rate of the second heating is 80 to 120°C/h, and heat holding time of the second heating is $t2=0.5$ to $1.2\times S$, where S is a wall thickness of a steel pipe in mm, and t2 is in min.

7. The heat treatment method according to claim 6, wherein parameters of the tempering process meet the following conditions: $X=T2\times (S/10+lgt2)/1000$, $42\leq X\leq 48$.

8. A production method for the high-strength, high-toughness, and long-life steel for a subsea Christmas tree valve body with a wall thickness of $\geq$ 600mm according to claim 1 or 2, wherein the production method comprises the following steps: arc furnace or converter smelting $\rightarrow$ LF furnace refining $\rightarrow$ RH or VD vacuum degassing $\rightarrow$ casting to obtain a continuous casting billet $\rightarrow$ heating the continuous casting billet $\rightarrow$ forging into valve bodies $\rightarrow$ heat treatment $\rightarrow$ machining $\rightarrow$ flaw detection $\rightarrow$ packaging and warehousing, wherein the heat treatment is carried out by the heat treatment method according to any one of claims 3 to 7.

9. The production method according to claim 8, wherein the continuous casting billet has a weight of $\geq$10 tons and a diameter of $\geq$1.2 meters.

SE 14-Jan-17 WD11.6mm 15.0kV x20k 1.6um

FIG. 1

SE 24-May-17 WD13.1mm 15.0kV x20k 1.6um

FIG. 2

## INTERNATIONAL SEARCH REPORT

| | |
|---|---|
| International application No. | |
| | **PCT/CN2023/079646** |

**A. CLASSIFICATION OF SUBJECT MATTER**

C22C38/02(2006.01)i; C21D6/00(2006.01)i

According to International Patent Classification (IPC) or to both national classification and IPC

**B. FIELDS SEARCHED**

Minimum documentation searched (classification system followed by classification symbols)

C22C38/-; C21D6/-

Documentation searched other than minimum documentation to the extent that such documents are included in the fields searched

Electronic data base consulted during the international search (name of data base and, where practicable, search terms used)

USTXT; CNABS; EPTXT; 中国期刊网全文数据库, CJFD; DWPI; ENTXTC; CNTXT: 马鞍山钢铁股份有限公司, 采油, 石油开采, 油井, 原油, 油田, 石油, 油气, 采油树, 低温韧性, 低温冲击韧性, 淬透性, 回火索氏体, 碳, 硅, 锰, 铬, 钼, 镍, 铜, 铝, 铌, 钛, 硼, 氮, 高强, 强度, 淬火, 阶梯, 梯度, 阶段, 分段, 回火, 电弧炉, 转炉, LF, 炉外精炼, RH, VD, 真空脱气, 锻, oil w extraction, oil w recovery, petroleum w production, oil w development, oil w production, petroleum w extraction, oil w extracting, petroleum w exploration, oil w spring, oil w well, petroleum w spring, oil w field, oil w pool, petroleum, oil w gas, oil w vapour, tenacity, toughness, ductility, hardenability, secondary w sorbite, tempered w sorbite, carbon, silicon, manganese, chromium, molybdenum, nickel, copper, aluminum, niobium, titanium, boron, nitrogen, quench+, ascent, gradient, stage, steps, stepped, sectional, emper+

**C. DOCUMENTS CONSIDERED TO BE RELEVANT**

| Category* | Citation of document, with indication, where appropriate, of the relevant passages | Relevant to claim No. |
|---|---|---|
| PX | CN 114540716 A (MA'ANSHAN IRON & STEEL CO., LTD.) 27 May 2022 (2022-05-27) claims 1-9 | 1-9 |
| A | CN 111876665 A (MA'ANSHAN IRON & STEEL CO., LTD.) 03 November 2020 (2020-11-03) description, paragraphs 7-23 and 41-42 | 1-9 |
| A | CN 104894487 A (JIANGSU SHAGANG GROUP HUAIGANG SPECIAL STEEL CO., LTD.) 09 September 2015 (2015-09-09) entire document | 1-9 |
| A | CN 104046910 A (BAOSHAN IRON & STEEL CO., LTD.) 17 September 2014 (2014-09-17) entire document | 1-9 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search <br><br> **02 June 2023** | Date of mailing of the international search report <br><br> **08 June 2023** |
| Name and mailing address of the ISA/CN <br><br> **China National Intellectual Property Administration (ISA/CN)** <br> **China No. 6, Xitucheng Road, Jimenqiao, Haidian District, Beijing 100088** | Authorized officer <br><br><br><br> Telephone No. |

Form PCT/ISA/210 (second sheet) (July 2022)

**INTERNATIONAL SEARCH REPORT**

| International application No. |
|---|
| **PCT/CN2023/079646** |

**C.    DOCUMENTS CONSIDERED TO BE RELEVANT**

| Category* | Citation of document, with indication, where appropriate, of the relevant passages | Relevant to claim No. |
|---|---|---|
| A | CN 114107805 A (RIZHAO STEEL YINGKOU MEDIUM PLATE CO., LTD. STEEL PLANT) 01 March 2022 (2022-03-01)<br>entire document | 1-9 |
| A | CN 113913695 A (ANGANG STEEL CO., LTD.) 11 January 2022 (2022-01-11)<br>entire document | 1-9 |
| A | CN 111054881 A (NANJING DEVELOP ADVANCED MANUFACTURING CO., LTD.) 24 April 2020 (2020-04-24)<br>entire document | 1-9 |
| A | JP 2019112681 A (NIPPON STEEL CORP.) 11 July 2019 (2019-07-11)<br>entire document | 1-9 |
| A | JP 2012026030 A (JFE STEEL CORP.) 09 February 2012 (2012-02-09)<br>entire document | 1-9 |

Form PCT/ISA/210 (second sheet) (July 2022)

**INTERNATIONAL SEARCH REPORT**
Information on patent family members

International application No.

**PCT/CN2023/079646**

| Patent document cited in search report | | | Publication date (day/month/year) | Patent family member(s) | | | Publication date (day/month/year) |
|---|---|---|---|---|---|---|---|
| CN | 114540716 | A | 27 May 2022 | CN | 114540716 | B | 01 November 2022 |
| CN | 111876665 | A | 03 November 2020 | CN | 111876665 | B | 02 November 2021 |
| CN | 104894487 | A | 09 September 2015 | CN | 104894487 | B | 22 February 2017 |
| CN | 104046910 | A | 17 September 2014 | WO | 2016000444 | A1 | 07 January 2016 |
| | | | | US | 2017159157 | A1 | 08 June 2017 |
| | | | | DE | 112015003075 | T5 | 23 March 2017 |
| | | | | JP | 2017525844 | A | 07 September 2017 |
| | | | | JP | 6456986 | B2 | 23 January 2019 |
| | | | | CN | 104046910 | B | 30 November 2016 |
| CN | 114107805 | A | 01 March 2022 | CN | 114107805 | B | 02 December 2022 |
| CN | 113913695 | A | 11 January 2022 | CN | 113913695 | B | 18 October 2022 |
| CN | 111054881 | A | 24 April 2020 | | None | | |
| JP | 2019112681 | A | 11 July 2019 | JP | 6950519 | B2 | 13 October 2021 |
| JP | 2012026030 | A | 09 February 2012 | JP | 5779984 | B2 | 16 September 2015 |

Form PCT/ISA/210 (patent family annex) (July 2022)

**REFERENCES CITED IN THE DESCRIPTION**

**Patent documents cited in the description**

- CN 102839331 A

- CN 112281069 A